# EUROPEAN PATENT APPLICATION

(11) **EP 4 597 432 A1**
(43) Date of publication of application: **06.08.2025**
(21) Application number: 23902805.3
(22) Date of filing: 14.12.2023
(51) Int. Cl.: G06T 13/40

(54) **DATA PROCESSING METHOD OF TASK PROCESSING MODEL AND VIRTUAL CHARACTER ANIMATION GENERATION METHOD**

(30) Priority: 15.12.2022 CN 202211611176
(71) Applicant: Alibaba Innovation Private Limited, Singapore 189554 (SG)
(72) Inventor: BAI, Shuai, Beijing 100102 (CN); MA, Jianxin, Hangzhou, Zhejiang 310030 (CN); ZHOU, Chang, Beijing 100102 (CN)
(74) Representative: Novagraaf Technologies
(86) International application number: PCT/CN2023/138894
(87) International publication number: WO 2024/125612

(57) **Abstract**

Embodiments of the present disclosure provide a data processing method for a task processing model and a method for generating virtual character animation, where the data processing method for the task processing method includes that: a first sample set is obtained, where the first sample set includes multi-modal sample guiding information; the sample guiding information and a sample task sequence are input into an initial processing model to obtain predicted task embeddings corresponding to the sample guiding information; the initial processing model is trained according to the predicted task embeddings and sample task embeddings corresponding to the sample task sequence to obtain model parameters of a task processing model in response to reaching a first preset stopping condition, where the sample task embeddings are obtained by quantizing and encoding the sample task sequence; and the model parameters of the task processing model are sent to the multiple terminal-side devices. Since the task processing model is trained based on the multi-modal sample guiding information, unified processing of multi-modal tasks can be achieved, thereby enhancing the accuracy and universality of the task processing model.

## Description

The present disclosure claims priority of Chinese Patent Application No. 202211611176.1, filed to China National Intellectual Property Administration on December 15, 2022 and titled "Data Processing Method for Task Processing Model and Method for Generating Virtual Character Animation", the content of which is hereby incorporated by reference in its entirety.

### TECHNICAL FIELD

Embodiments of the present disclosure relate to the field of computer technology, particularly relate to a data processing method for a task processing model. At least one embodiment of the present disclosure further relates to a method for generating virtual character animation, a data processing system for a task processing model, a data processing apparatus for a task processing model, an apparatus for generating virtual character animation, a computing device, and a computer-readable storage medium.

### BACKGROUND OF THE INVENTION

With the development of computer technology, action generation has gradually become a critical step in film, television, games, and digital human applications, for example, the action generation of characters in videos, the action generation of characters in games, the action generation of customer service objects on web pages or application software, and the action generation of virtual characters in film production. The realism of actions stands out as one of key factors reflecting the authenticity and natural interaction between characters and environments.

Currently, the action generation relies heavily on the capture of real human movements, which is often inefficient and demands high environmental conditions and capturing hardware. Moreover, the generated actions exhibit low accuracy, necessitating refinement in post-production. Therefore, there is an urgent need for a broadly applicable and accurate action generation solution.

### SUMMARY OF THE INVENTION

In view of this, embodiments of the present disclosure provide a data processing method for a task processing model. At least one embodiment of the present disclosure further relates to a method for generating virtual character animation, a data processing system for a task processing model, a data processing apparatus for a task processing model, an apparatus for generating virtual character animation, a computing device, a computer-readable storage medium, and a computer program to solve technical problems existing in the related art.

According to a first aspect of the embodiments of the present disclosure, a data processing method for a task processing model is provided, applied to a cloud-side device, where the cloud-side device is connected with multiple terminal-side devices and the method includes that:
a first sample set is obtained, where the first sample set includes multi-modal sample guiding information;
the sample guiding information and a sample task sequence are input into an initial processing model to obtain predicted task embeddings corresponding to the sample guiding information;
the initial processing model is trained according to the predicted task embeddings and sample task embeddings corresponding to the sample task sequence to obtain model parameters of a task processing model in response to reaching a first preset stopping condition, where the sample task embeddings are obtained by quantizing and encoding the sample task sequence; and
the model parameters of the task processing model are sent to the multiple terminal-side devices.

According to a second aspect of the embodiments of the present disclosure, a data processing method for a task processing model is provided, applied to a terminal-side device, where the terminal-side device is connected with a cloud-side device and the method includes that:
model parameters of a task processing model sent by the cloud-side device are received, and a task processing model is constructed according to the model parameters;
a task processing request input by a user is received, where the task processing request includes task guiding information;
the task guiding information and a fully-masked task sequence are input into the task processing model to obtain target task embeddings corresponding to the task guiding information after processing the task guiding information and the fully-masked task sequence by the task processing model, where the task processing model is trained based on multi-modal sample guiding information, a sample task sequence and sample task embeddings, and the sample task embeddings are obtained by quantizing and encoding the sample task sequence; and
the target task embeddings are quantized and decoded to obtain a task processing result corresponding to the task guiding information.

According to a third aspect of the embodiments of the present disclosure, a method for generating virtual character animation is provided, including:
a virtual character animation generation request sent by a frontend is received, where the virtual character animation generation request includes animation guiding information;
the animation guiding information and a fully-masked animation sequence are input into a virtual character animation generation model to obtain virtual character animation embeddings corresponding to the animation guiding information after processing the animation guiding information and the fully-masked animation sequence by the virtual character animation generation model, where the virtual character animation generation model is trained based on sample animation guiding information, a sample animation sequence, and sample animation embeddings, and the sample animation embeddings are obtained by quantizing and encoding the sample animation sequence;
the virtual character animation embeddings are quantized and decoded to obtain a virtual character action sequence corresponding to the animation guiding information; and virtual character animation is generated based on the virtual character action sequence and the virtual character animation is sent to the frontend to display the virtual character animation.

According to a fourth aspect of the embodiments of the present disclosure, a data processing apparatus for a task processing model is provided, applied to a cloud-side device, where the cloud-side device is connected with multiple terminal-side devices and the apparatus includes:
an obtaining module, arranged for obtaining a first sample set, where the first sample set includes multi-modal sample guiding information;
a first inputting module, arranged for inputting the sample guiding information and a sample task sequence into an initial processing model to obtain predicted task embeddings corresponding to the sample guiding information;
a training module, arranged for training the initial processing model according to the predicted task embeddings and sample task embeddings corresponding to the sample task sequence to obtain model parameters of a task processing model in response to reaching a first preset stopping condition, where the sample task embeddings are obtained by quantizing and encoding the sample task sequence; and
a sending module, arranged for sending the model parameters of the task processing model to the multiple terminal-side devices.

According to a fifth aspect of the embodiments of the present disclosure, a data processing apparatus for a task processing model is provided, applied to a terminal-side device, where the terminal-side device is connected with a cloud-side device and the apparatus includes:
a constructing module, arranged for receiving model parameters of a task processing model sent by the cloud-side device, and constructing a task processing model according to the model parameters;
a first receiving module, arranged for receiving a task processing request input by a user, where the task processing request includes task guiding information;
a second inputting module, arranged for inputting the task guiding information and a fully-masked task sequence into the task processing model to obtain target task embeddings corresponding to the task guiding information after processing the task guiding information and the fully-masked task sequence by the task processing model, where the task processing model is trained based on multi-modal sample guiding information, a sample task sequence and sample task embeddings, and the sample task embeddings are obtained by quantizing and encoding the sample task sequence; and
a first decoding module, arranged for quantizing and decoding the target task embeddings to obtain a task processing result corresponding to the task guiding information.

According to a sixth aspect of the embodiments of the present disclosure, a method for generating virtual character animation is provided, including:
a second receiving module, arranged for receiving a virtual character animation generation request sent by a frontend, where the virtual character animation generation request includes animation guiding information;
a third inputting module, arranged for inputting the animation guiding information and a fully-masked animation sequence into a virtual character animation generation model to obtain virtual character animation embeddings corresponding to the animation guiding information after processing the animation guiding information and the fully-masked animation sequence by the virtual character animation generation model, where the virtual character animation generation model is trained based on sample animation guiding information, a sample animation sequence, and sample animation embeddings, and the sample animation embeddings are obtained by quantizing and encoding the sample animation sequence;
a first decoding module, arranged for quantizing and decoding the virtual character animation embeddings to obtain a virtual character action sequence corresponding to the animation guiding information; and
a generating module, arranged for generating virtual character animation based on the virtual character action sequence and sending the virtual character animation to the frontend to display the virtual character animation.

According to a seventh aspect of the embodiments of the present disclosure, a data processing system for a task processing model, including:
a terminal-side device, arranged for constructing a first sample set and sending the first sample set to a cloud-side device, where the first sample set includes multi-modal sample guiding information; and
the cloud-side device, arranged for inputting the sample guiding information and a sample task sequence into an initial processing model to obtain predicted task embeddings corresponding to the sample guiding information; training the initial processing model according to the predicted task embeddings and sample task embeddings corresponding to the sample task sequence to obtain model parameters of a task processing model in response to reaching a first preset stopping condition, where the sample task embeddings are obtained by quantizing and encoding the sample task sequence; and sending the model parameters of the task processing model to the terminal-side device.

According to an eighth aspect of the embodiments of the present disclosure, a computing device is provided, including:
a memory and a processor;
where the memory is arranged for storing computer executable instructions, the processor is arranged for executing the computer executable instructions, and when executing the computer executable instructions, the processor implements steps mentioned in the first aspect, or the second aspect, or the third aspect of the embodiments.

According to a ninth aspect of the embodiments of the present disclosure, a computer-readable storage medium is provided, storing computer executable instructions, where the computer executable instructions are executed by the processor to implement steps mentioned in the first aspect, or the second aspect, or the third aspect of the embodiments.

According to a tenth aspect of the embodiments of the present disclosure, a computer program is provided, where when executing the computer program, a computer implement steps mentioned in the first aspect, or the second aspect, or the third aspect of the embodiments.

Through the embodiments of the present disclosure provide the data processing method for the task processing model, the first sample set is obtained, where the first sample set includes the multi-modal sample guiding information; the sample guiding information and the sample task sequence are input into the initial processing model to obtain the predicted task embeddings corresponding to the sample guiding information; the initial processing model is trained according to the predicted task embeddings and the sample task embeddings corresponding to the sample task sequence to obtain the model parameters of the task processing model in response to reaching the first preset stopping condition, where the sample task embeddings are obtained by quantizing and encoding the sample task sequence; and the model parameters of the task processing model are sent to the multiple terminal-side devices. Since the task processing model is trained based on the multi-modal sample guiding information, unified processing of multi-modal tasks can be achieved, thereby enhancing the accuracy and universality of the task processing model.

### BRIEF DESCRIPTION OF DRAWINGS

FIG. 1 is a framework diagram of a data processing system for a task processing model according to some embodiments of the present disclosure.
FIG. 2 is a framework diagram of another data processing system for a task processing model according to some embodiments of the present disclosure.
FIG. 3 is a flowchart of a data processing method for a task processing model according to some embodiments of the present disclosure.
FIG. 4 is a flowchart of another data processing method for a task processing model according to some embodiments of the present disclosure.
FIG. 5 is a flowchart of a method for generating virtual character animation according to some embodiments of the present disclosure.
FIG. 6 is a schematic diagram of a processing procedure of a method for generating virtual character animation according to some embodiments of the present disclosure.
FIG. 7 is an interface schematic diagram of a generation interface for virtual character animation according to some embodiments of the present disclosure.
FIG. 8 is a flowchart of a data processing method for a quantized generation model according to some embodiments of the present disclosure.
FIG. 9 is a training flowchart of a task processing model and a quantized generation model according to some embodiments of the present disclosure.
FIG. 10 is a structural schematic diagram of a data processing apparatus for a task processing model according to some embodiments of the present disclosure.
FIG. 11 is a structural schematic diagram of another data processing apparatus for a task processing model according to some embodiments of the present disclosure.
FIG. 12 is a structural schematic diagram of an apparatus for generating virtual character animation according to some embodiments of the present disclosure.
FIG. 13 is a structural block diagram of a computing device according to some embodiments of the present disclosure.

### DETAILED DESCRIPTION OF THE INVENTION

In the following description, numerous specific details are set forth to fully understand the present disclosure. However, the present disclosure can be implemented in many different ways from those described herein. A person having ordinary skill in the art can make similar promotions without contradicting the connotation of the present disclosure, so the present disclosure is not limited by the specific embodiments disclosed below.

In at least one embodiment used in the present disclosure, terms are used for the purpose of describing particular embodiments and are not intended to limit the at least one embodiment of the present disclosure. The singular forms "a", "the", and "this" used in the at least one embodiment of the present disclosure and the appended claims further aim to include plural forms, unless otherwise clearly indicated in the context. It should also be understood that the term "and/or" used in the at least one embodiment of the present disclosure refers to and includes any or all possible combinations of at least one associated listed item.

It should be understood that although the terms first, second, etc. may be adopted in the at least one embodiment of the present disclosure to describe various information, such information should not be limited to these terms. These terms are used for distinguishing information of the same type from each other. For example, without departing from the scope of the at least one embodiment of the present disclosure, the first can also be referred to as the second, and similarly, the second can also be referred to as the first. Depending on the context, the word "if" as used herein can be interpreted as "when" or "in case of" or "in response to determining".

Firstly, explanation is provided for the terminology involved in the at least one embodiment of the present disclosure.

Transformer refers to a type of neural network structure.

Seq2seq refers to an encoding-decoding structure where inputs and outputs can be sequences of unequal length.

Human Motion refers to in a three-Dimensional (3D) digital human, or a 3D game, or a 3D animation, skeletal data driving a human model to perform limb movements, consisting of multiple frames, with data of each frame describing the orientation and displacement of the entire body and the rotation angles of various joints of the entire body.

Diffusion Models refer to a new type of deep generative model. During training, noise of different intensities (intensity=0, 1, ... , or T) is applied to samples, requiring this model to restore samples without noise based on the noise intensity and the samples with noise. During inference, starting from a random noisy sample (noise intensity=T), the model gradually denoises the random noisy sample to obtain samples with noise intensities of T-1, T-2, ... , 0, respectively, and the sample with noise intensity of 0 is the final generated sample by this model.

With the development of computer technology, action generation has gradually become a key step in film and television, games, and digital human applications. Traditional methods of the action generation rely heavily on capturing real human motions, which is often inefficient and requires high environmental and capture hardware standards, along with necessary post-processing. Currently, learning-based methods have made continuous progress in the action generation, achieving the generation of high-quality continuous motions under different conditions through learning from large amounts of motion capture data. However, facing diverse demands for action generation tasks, users often adopt specific frameworks for separate training on corresponding tasks, unable to benefit from different task and type datasets.

To solve the above problem, the embodiments of the present disclosure propose a unified task processing framework for multiple tasks, breaking down barriers between different tasks, learning higher semantic information from different cross-modal data signals, enabling effective representation and learning for different generation tasks, thus achieving various generation needs, providing rich motion materials for film and television, games, digital human applications, etc., at low cost, efficiently, and accurately. Specifically, the first sample set is obtained, where the first sample set includes the multi-modal sample guiding information; the sample guiding information and the sample task sequence are input into the initial processing model to obtain the predicted task embeddings corresponding to the sample guiding information; the initial processing model is trained according to the predicted task embeddings and the sample task embeddings corresponding to the sample task sequence to obtain the model parameters of the task processing model in response to reaching the first preset stopping condition, where the sample task embeddings are obtained by quantizing and encoding the sample task sequence; and the model parameters of the task processing model are sent to the multiple terminal-side devices. Since the task processing model is trained based on the multi-modal sample guiding information, unified processing of multi-modal tasks can be achieved, thereby enhancing the accuracy and universality of the task processing model.

The embodiments of the present disclosure provide a data processing method for a task processing model. At least one embodiment of the present disclosure further relates to a method for generating virtual character animation, a data processing system for a task processing model, a data processing apparatus for a task processing model, an apparatus for generating virtual character animation, a computing device, a computer-readable storage medium, and a computer program. In the embodiments described below, each will be explained in detail.

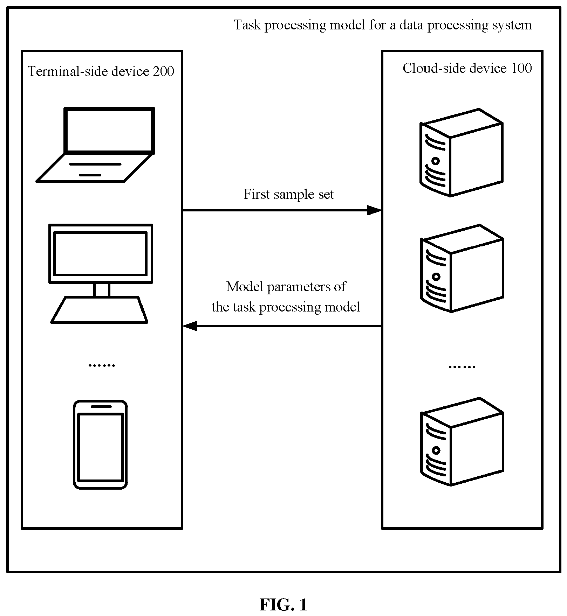

As shown in FIG. 1, FIG. 1 is a framework diagram of a data processing system for a task processing model according to some embodiments of the present disclosure. The data processing system for the task processing model includes: a cloud-side device 100 and a terminal-side device 200.

The terminal-side device 200 is arranged for constructing a first sample set and sending the first sample set to the cloud-side device 100, where the first sample set includes multi-modal sample guiding information.

The cloud-side device 100 is arranged for inputting the sample guiding information and a sample task sequence into an initial processing model to obtain predicted task embeddings corresponding to the sample guiding information; training the initial processing model according to the predicted task embeddings and sample task embeddings corresponding to the sample task sequence to obtain model parameters of a task processing model in response to reaching a first preset stopping condition, where the sample task embeddings are obtained by quantizing and encoding the sample task sequence; and sending the model parameters of the task processing model to the terminal-side device 200.

Through the solutions provided by the embodiments of the present disclosure, the first sample set is obtained, where the first sample set includes the multi-modal sample guiding information; the sample guiding information and the sample task sequence are input into the initial processing model to obtain the predicted task embeddings corresponding to the sample guiding information; the initial processing model is trained according to the predicted task embeddings and the sample task embeddings corresponding to the sample task sequence to obtain the model parameters of the task processing model in response to reaching the first preset stopping condition, where the sample task embeddings are obtained by quantizing and encoding the sample task sequence; and the model parameters of the task processing model are sent to the multiple terminal-side devices. Since the task processing model is trained based on the multi-modal sample guiding information, unified processing of multi-modal tasks can be achieved, thereby enhancing the accuracy and universality of the task processing model.

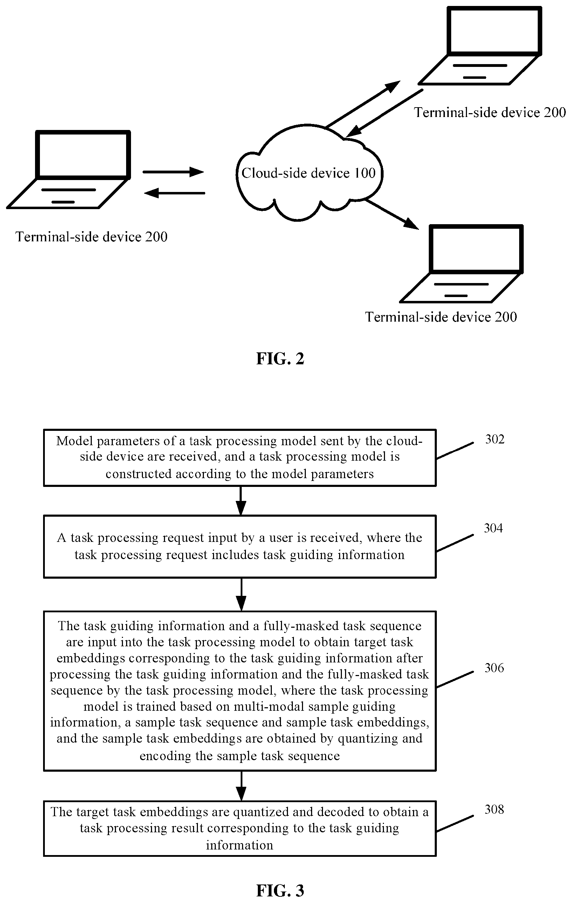

As shown in FIG.2, FIG. 2 is a framework diagram of another data processing system for a task processing model according to some embodiments of the present disclosure. The system includes a cloud-side device 100 and multiple terminal-side devices 200. The multiple terminal-side devices 200 establish communication connections through the cloud-side device 100. In a task processing scenario, the cloud-side device 100 is used for providing task processing services among the multiple terminal-side devices 200. The multiple terminal-side devices 200 act respectively as sending or receiving ends, thereby achieving real-time communication through the cloud-side device 100.

Users interact with the cloud-side device 100 via the terminal-side device 200 to receive data sent from other terminal-side devices 200 or send data to other terminal-side devices 200. In the task processing scenario, the users publish data streams to the cloud-side device 100 through the terminal-side device 200, so that the cloud-side device 100 performs action generation based on the data streams and pushes an action generation result to other terminal-side devices with established communications.

The terminal-side device 200 connects with the cloud-side device 100 through a network. The network provides a communication link medium between the terminal-side device and the cloud-side device. The network includes various connection types, such as a wired communication link, a wireless communication link, or a fiber optic cable, etc. Data transmitted by the terminal-side device 200 is required to undergo encoding, transcoding, compression, and other processes before being published to the cloud-side device 100.

The terminal-side device 200 is a browser, an Application (APP), or a web application such as a HyperText Markup Language5 (H5) application, a lightweight application (also known as a mini-program, a type of lightweight application), or a cloud application, etc. The terminal-side device 200 is obtained based on a software development kits (SDK) of a corresponding service provided by the cloud-side device, such as the terminal-side device is developed based on a real-time communication (RTC) SDK. The terminal-side device 200 is deployed in an electronic device, requiring operation either dependent on the electronic device or certain APPs within the electronic device. The electronic device is a personal mobile terminal, having a display screen for supporting information browsing, such as a smartphone, a tablet, a personal computer, etc. Various other types of applications are typically arranged in the electronic device, including a human-machine dialogue application, a model training application, a text processing application, a web browser application, a shopping application, a search application, an instant messaging tool, an email terminal-side device, social platform software, etc.

The cloud-side device 100 includes servers providing various services, for example, servers providing communication services for multiple terminal-side devices, servers supporting models used on the terminal-side device for background training, and servers processing data sent from the terminal-side device, etc. It should be noted that the cloud-side device 100 is implemented as a distributed server cluster composed of multiple servers or as a single server. The servers can also be servers of a distributed system, or servers combined with blockchain technology. The servers can also be cloud servers providing basic cloud computing services such as cloud services, cloud databases, cloud computing, cloud functions, cloud storage, network services, cloud communication, middleware services, domain name services, security services, content distribution network (CDN), and big data and artificial intelligence platforms, or intelligent cloud computing servers or smart cloud hosts with artificial intelligence technology.

As shown in FIG.3, FIG. 3 is a flowchart of a data processing method for a task processing model according to some embodiments of the present disclosure. The data processing method for the task processing model is applied to a terminal-side device, and the terminal-side device is connected with a cloud-side device. The method includes the following steps.

In step 302, model parameters of a task processing model sent by the cloud-side device are received, and a task processing model is constructed according to the model parameters.

In some embodiments, for the purpose of accurate and efficient task processing, the model parameters of the task processing model sent by the cloud-side device are received, and based on the model parameters, the task processing model is constructed, so that task processing can be realized through the task processing model.

In step 304, a task processing request input by a user is received, where the task processing request includes task guiding information.

In some embodiments, in the early stage of task processing, the task guidance information is obtained, and the task guidance information can be used for guiding a task processing procedure, thereby efficiently and accurately generating a processing result that conforms to the task guidance information.

Specifically, the task processing request is a processing request for different tasks, where tasks include but are not limited to text generation tasks, action generation tasks, speech processing tasks, and so on. The task guidance information is multi-modal and includes but is not limited to textual guidance information, image guidance information, voice guidance information, trajectory guidance information, video guidance information, and so forth, with specific selection based on actual circumstances, without any limitation in the embodiments of the present disclosure. Taking an action generation task as an example, action guidance information is the action guidance information for different digital objects such as virtual characters, virtual animals, virtual vehicles, and so on. The textual guidance information includes but is not limited to action categories, natural language description texts. The image guidance information is further understood as visual signals, such as reference images containing reference actions, actions at certain moments, aiming to ensure consistency of actions at corresponding moments in a generated action sequence, such as action in-betweening, action in-filling. The trajectory guidance information is further understood as trajectory signals, referring to positions at different time points in an action sequence, controlling the direction of object advancement, which can be used for motion control tasks.

In practical applications, there are multiple ways to receive the task processing request input by the user, specifically selected based on actual circumstances, without any limitation in the embodiments of the present disclosure. In some embodiments, the task processing request actively sent by the user is received, where the task processing request includes the task guidance information. In some embodiments, the task processing request includes an information identifier of the task guidance information. The information identifier of the task guidance information is obtained from a guidance information database, and the guidance information database includes multiple different types of the task guidance information.

In step 306, the task guiding information and a fully-masked task sequence are input into the task processing model to obtain target task embeddings corresponding to the task guiding information after processing the task guiding information and the fully-masked task sequence by the task processing model, where the task processing model is trained based on multi-modal sample guiding information, a sample task sequence and sample task embeddings, and the sample task embeddings are obtained by quantizing and encoding the sample task sequence.

In some embodiments, after receiving the task processing request input by the user, the task guiding information and the fully-masked task sequence are input into the task processing model to obtain the target task embeddings corresponding to the task guiding information after processing the task guiding information and the fully-masked task sequence by the task processing model.

Specifically, the task processing model is a Transformer model capable of performing embedding extraction on the task guidance information, and through the processing of the task processing model, the task guidance information is processed into discrete target task embeddings.

It needs to be noted that the task processing model includes a first encoder and a first decoder, an operation of inputting the task guiding information and the fully-masked task sequence into the task processing model to obtain the target task embeddings corresponding to the task guiding information after processing the task guiding information and the fully-masked task sequence by the task processing model includes the following step.

The task guiding information is input into the first encoder to obtain task guiding embeddings corresponding to the task guiding information.

The task guiding embeddings and the fully-masked task sequence are input into the first decoder to obtain the target task embeddings corresponding to the task guiding information.

Specifically, the task sequence is a continuous representation of a task, such as an action sequence including at least one of 23 major joint points. Actions are mainly represented through rotation angles of each bone, and these rotation angles are continuous.

It needs to be noted that the task guidance information is input into the first encoder, so that the first encoder encodes the task guidance information to generate an encoded representation corresponding to the task guidance information, namely the task guidance embeddings. After obtaining the task guidance embeddings, unlike the training of the task processing model, in practical applications, there exists no reference sample task sequences. Thus, iteration masking is performed on the task processing under conditions without reference task sequences based on fully masked task sequences, thereby predicting complete task sequences, and further obtaining the target task embeddings corresponding to the task guidance information.

Through the solution of the embodiments of the present disclosure, the task guidance information is input into the first encoder to obtain the task guidance embeddings corresponding to the task guidance information. Through inputting the task guidance embeddings and the fully masked task sequences into the first decoder, target task embeddings corresponding to the task guidance information are obtained, thereby achieving efficient and accurate acquisition of the target task embeddings.

In step 308, the target task embeddings are quantized and decoded to obtain a task processing result corresponding to the task guiding information.

In some embodiments of the present disclosure, the task processing request input by the user is received, where the task processing request includes the task guidance information. The task guidance information and the fully masked task sequences are input into the task processing model, and through the processing of the task processing model, the target task embeddings corresponding to the task guidance information are obtained. Further, the target task embeddings are quantized and decoded to obtain the task processing result corresponding to the task guiding information.

Through the solution provided by the embodiments of the present disclosure, the model parameters of the task processing model sent by the cloud-side device are received, and the task processing model is constructed according to the model parameters; the task processing request input by the user is received, where the task processing request includes the task guiding information; the task guiding information and the fully-masked task sequence are input into the task processing model to obtain the target task embeddings corresponding to the task guiding information after processing the task guiding information and the fully-masked task sequence by the task processing model, where the task processing model is trained based on the multi-modal sample guiding information, the sample task sequence and the sample task embeddings, and the sample task embeddings are obtained by quantizing and encoding the sample task sequence; and the target task embeddings are quantized and decoded to obtain the task processing result corresponding to the task guiding information. Since the task processing model is trained based on the multi-modal sample guiding information, unified processing of multi-modal tasks can be achieved, thereby enhancing the accuracy and universality of the task processing model.

In the embodiments of the present disclosure, the task processing model includes a first encoder and a first decoder, the training method for the first encoder and the first decoder will be described in detail one by one in the following embodiments.

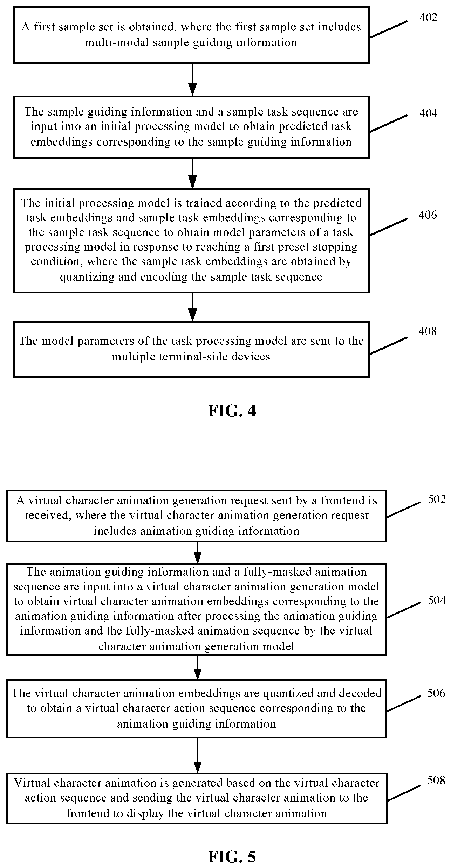

As shown in FIG.4, FIG. 4 is a flowchart of another data processing method for a task processing model according to some embodiments of the present disclosure. The data processing method for the task processing model is applied to a cloud-side device, and the cloud-side device is connected with multiple terminal-side devices. The method includes the following step.

In step 402, a first sample set is obtained, where the first sample set includes multi-modal sample guiding information.

Specifically, the sample guide information includes multiple modalities of control signals, including at least two types of information among sample text information, sample image information, sample trajectory information, sample voice information, sample video information, and the like.

It should be noted that there are multiple ways to obtain the first sample set. One way is to manually input a large amount of multi-modal sample guide information to form the first sample set. Another way is to read a large amount of multi-modal sample guide information from other data acquisition devices or databases to form the first sample set. The method to obtain the first sample set is selected specifically according to actual conditions, and the embodiments of the present disclosure do not impose any limitations on this.

In step 404, the sample guiding information and a sample task sequence are input into an initial processing model to obtain predicted task embeddings corresponding to the sample guiding information.

In step 406, the initial processing model is trained according to the predicted task embeddings and sample task embeddings corresponding to the sample task sequence to obtain model parameters of a task processing model in response to reaching a first preset stopping condition, where the sample task embeddings are obtained by quantizing and encoding the sample task sequence.

In step 408, the model parameters of the task processing model are sent to the multiple terminal-side devices.

Specifically, the sample task sequence is a continuous representation of the sample task. The initial processing model includes a first encoder and a first decoder, and the first preset stopping condition includes a first stopping sub-condition.

Through the solution provided by the embodiments of the present disclosure, the first sample set is obtained, where the first sample set includes the multi-modal sample guiding information; the sample guiding information and the sample task sequence are input into the initial processing model to obtain the predicted task embeddings corresponding to the sample guiding information; the initial processing model is trained according to the predicted task embeddings and the sample task embeddings corresponding to the sample task sequence to obtain the model parameters of the task processing model in response to reaching the first preset stopping condition, where the sample task embeddings are obtained by quantizing and encoding the sample task sequence; and the model parameters of the task processing model are sent to the multiple terminal-side devices. Since the task processing model is trained based on the multi-modal sample guiding information, unified processing of multi-modal tasks can be achieved, thereby enhancing the accuracy and universality of the task processing model.

In some embodiments, an operation of inputting the sample guiding information and the sample task sequence into the initial processing model to obtain the predicted task embeddings corresponding to the sample guiding information includes the following steps.

First sample guiding information is extracted from the first sample set, where the first sample guiding information is any sample guiding information in the first sample set.

The first sample guiding information is input into the first encoder to obtain first sample guiding embeddings.

The sample task sequence is masked to obtain a masked task sequence.

The first sample guiding embeddings and the masked task sequence are input into the first decoder to obtain first predicted task embeddings.

An operation of training the initial processing model according to the predicted task embeddings and the sample task embeddings corresponding to the sample task sequence to obtain the model parameters of the task processing model in response to reaching the first preset stopping condition includes the following steps.

A decoding loss value is calculated based on the first predicted task embeddings and the sample task embeddings corresponding to the sample task sequence.

Parameters of the first decoder is adjusted according to the decoding loss value, and a step of extracting the first sample guiding information from the first sample set is returned to be executed to obtain the first decoder in response to reaching the first stopping sub-condition.

It should be noted that the pre-trained first encoder refers to a first encoder of a pre-trained initial processing model. When training the first decoder, a training method similar to a embeddings extraction model, such as a Vision Transformer (ViT), is adopted. The sample task sequence corresponding to the sample guide information is spliced, an adjacent moment and a key point are considered as one patch, thereby obtaining multiple patches. Each patch is then flattened and mapped through one linear layer into an input embedding. Additionally, a learnable [Motion MASK] token is added into the input embedding to represent the masked position.

Furthermore, during the training process of the first decoder, an iterative masking training method is adopted. The iterative masking process includes a degradation process and a restoration process. Specifically, the degradation process occurs at the discrete code level. During each iteration, embeddings in the sample task sequence are replaced with embeddings of mask tokens at a certain probability. In terms of a sampling method, network prediction for sampling positions is adopted to increase convergence speed, thereby making the prediction result more stable.

In some possible implementation manners of the present disclosure, the first stop sub-condition includes a decoding loss value less than or equal to a first preset threshold. The specific value of the first preset threshold is chosen according to actual conditions, and the embodiments of the present disclosure do not impose any limitations on this. The first sample guide embeddings and the masked task sequence are input into the first decoder to obtain the first predicted task embeddings. After obtaining the first predicted task embeddings, the decoding loss value is calculated based on the first predicted task embeddings and the sample task embeddings corresponding to the sample task sequence. The decoding loss value is then compared with the first preset threshold.

Specifically, when the decoding loss value is greater than the first preset threshold, it indicates that there is a significant difference between the first predicted task embeddings and the sample task embeddings corresponding to the sample task sequence, suggesting that the predictive capability of the first decoder for the first sample guide embeddings and the masked task sequence is poor. At this point, parameters of the first decoder are adjusted, and the step of extracting the first sample guide embeddings from the multi-modal sample guide information can be repeated to continue training the first decoder until the decoding loss value is less than or equal to the first preset threshold, which indicates a smaller difference between the first predicted task embeddings and the sample task embeddings corresponding to the sample task sequence, thereby meeting the first stop sub-condition and obtaining a fully trained first decoder.

Through the solution of the embodiments of the present disclosure, the first sample guide embeddings and the masked task sequence are input into the first decoder to obtain the first predicted task embeddings; the decoding loss value is calculated based on the first predicted task embeddings and the sample task embeddings corresponding to the sample task sequence; the decoding loss value is compared with the first preset threshold, and the first decoder is continued to be trained when the decoding loss value is greater than the first preset threshold until the decoding loss value is less than or equal to the first preset threshold, so as to complete the training of the first decoder. Through continuous adjustment of the parameters of the first decoder, the final obtained first decoder becomes more accurate.

In some implementation manners of the present disclosure, besides comparing the size relationship between the decoding loss value and the first preset threshold, the number of iterations can also be considered to determine whether the current first decoder has completed training.

Specifically, when the decoding loss value is greater than the first preset threshold, the parameters of the first decoder are adjusted, and the step of extracting the first sample guide embeddings from multi-modal sample guide information is repeated to continue training the first decoder. Training stops to obtain a fully trained first decoder when the first preset number of iterations is reached. The specific value of the first preset number of iterations is chosen according to actual conditions, and the embodiments of the present disclosure do not impose any limitations on this.

Through the solution of the embodiments of the present disclosure, the first sample guide embeddings and the masked task sequence are input into the first decoder to obtain the first predicted task embeddings; the decoding loss value is calculated based on the first predicted task embeddings and the sample task embeddings corresponding to the sample task sequence; the decoding loss value is compared with the first preset threshold, and the first decoder is continued to be trained when the decoding loss value is greater than the first preset threshold until reaching the first preset number of iterations, so as to complete the training of the first decoder. Through continuous adjustment of the parameters of the first decoder, the final obtained first decoder becomes more accurate.

In practical applications, there are many functions for calculating the decoding loss value, such as a cross-entropy loss function, a L1 norm loss function, a maximum loss function, a mean square error loss function, a log loss function, etc., where the specific choice is made according to actual conditions, and the embodiments of the present disclosure do not impose any limitations on this.

In some embodiments, the first preset stopping condition includes a second stopping sub-condition, and a training method for the first encoder includes the following steps.

A second sample set is obtained, where the second sample set includes multi-modal sample guiding information carrying sample guiding embeddings.

Second sample guiding information is extracted from the second sample set, where the second sample guiding information is any sample guiding information in the second sample set.

The second sample guiding information is input into the first encoder to obtain first predicted guiding embeddings corresponding to the second sample guiding information.

An encoding loss value is calculated based on the first predicted guiding embeddings and second sample guiding embeddings carried in the second sample guiding information.

Parameters of the first encoder are adjusted according to the encoding loss value, and a step of extracting the second sample guiding information from the second sample set is returned to be executed to obtain the first encoder in response to reaching the second stopping sub-condition.

Specifically, the task processing model adopts an encoder-decoder framework in structure. The first encoder and the first decoder are connected through at least one cross-attention layer to achieve seq2seq association, no longer relying on compression of a single latent variable. Both the first encoder and the first decoder adopt a multi-layer bidirectional transformer structure. The first encoder inputs multi-modal control signals, namely multi-modal sample guide information. The multi-modal sample guide information includes at least two types of information among sample text information, sample image information, sample trajectory information, sample voice information, sample video information, and so forth.

It should be noted that when training the first encoder, a large-scale pre-trained model is used, such as a multi-modal generation model (One-For-All, OFA), an image-text relevance matching model (Contrastive Language-Image Pre-training, CLIP), etc., with specific choices made according to actual conditions, and the embodiments of the present disclosure do not impose any limitations on this.

In practical applications, there are multiple ways to obtain the second sample set. One way is to manually input a large amount of multi-modal sample guide information to form the second sample set. Another way is to read a large amount of multi-modal sample guide information from other data acquisition devices or databases to form the second sample set. The method to obtain the second sample set is chosen specifically according to actual conditions, and the embodiments of the present disclosure do not impose any limitations on this.

In some possible implementation manners of the present disclosure, the second stop sub-condition includes an encoding loss value less than or equal to a second preset threshold. The specific value of the second preset threshold is chosen according to actual conditions, and the embodiments of the present disclosure do not impose any limitations on this. The second sample guide information is input into the first encoder to obtain the first predicted guide embeddings corresponding to the second sample guide information. After obtaining the first predicted guide embeddings, the encoding loss value is calculated based on the first predicted guide embeddings and the second sample guide embeddings carried by the second sample guide information. The encoding loss value is then compared with the second preset threshold.

Specifically, when the encoding loss value is greater than the second preset threshold, it indicates that there is a significant difference between the first predicted guide embeddings and the second sample guide embeddings carried by the second sample guide information, suggesting that the predictive capability of the first encoder for the second sample guide information is poor. At this point, parameters of the first encoder can be adjusted, and the step of extracting the second sample guide information from multi-modal sample guide information can be repeated to continue training the first encoder until the encoding loss value is less than or equal to the second preset threshold, which indicates a smaller difference between the first predicted guide embeddings and the second sample guide embeddings carried by the second sample guide information, thereby meeting the second stop sub-condition and obtaining a fully trained first encoder.

Through the solution of the embodiments of the present disclosure, the second sample guide information is input into the first encoder to obtain a first predicted guide embeddings corresponding to the second sample guide information; the encoding loss value is calculated based on the first predicted guide embeddings and the second sample guide embeddings carried by the second sample guide information; the encoding loss value is compared with the second preset threshold, and the first encoder is continued to be trained when the encoding loss value is greater than the second preset threshold until the encoding loss value is less than or equal to the second preset threshold, so as to complete the training of the first encoder. Through continuous adjustment of the parameters of the first encoder, the final obtained first encoder becomes more accurate.

In other possible implementation manners of the present disclosure, besides comparing the size relationship between the encoding loss value and the second preset threshold, the number of iterations can also be considered to determine whether the current first encoder has completed training.

Specifically, when the encoding loss value is greater than the second preset threshold, the parameters of the first encoder are adjusted, and the step of extracting the second sample guide information from the multi-modal sample guide information is repeated to continue training the first encoder. Training stops, when the second preset number of iterations is reached, to obtain a fully trained first encoder. The specific value of the second preset number of iterations is chosen according to actual conditions, and the embodiments of the present disclosure do not impose any limitations on this.

Through the solution of the embodiments of the present disclosure, the second sample guide information is input into the first encoder to obtain the first predicted guide embeddings corresponding to the second sample guide information; the encoding loss value is calculated based on the first predicted guide embeddings and the second sample guide embeddings carried by the second sample guide information; the encoding loss value is compared with the second preset threshold, and the first encoder is continued to be trained when the encoding loss value is greater than the second preset threshold until reaching the second preset number of iterations, so as to complete the training of the first encoder. Through continuous adjustment of the parameters of the first encoder, the final obtained first encoder becomes more accurate.

In practical applications, there are many functions for calculating the encoding loss value, such as a cross-entropy loss function, a L1 norm loss function, a maximum loss function, a mean square error loss function, a log loss function, etc. The specific choice is made according to actual conditions, and the embodiments of the present disclosure do not impose any limitations on this. The cross-entropy loss function can be utilized to calculate the encoding loss value. Through utilizing the cross-entropy loss function, the cross-entropy between the first predicted guide embeddings and the second sample guide embeddings carried by the second sample guide information is computed as the encoding loss value, thereby improving the efficiency of calculating the encoding loss value, and enhancing the training efficiency of the first encoder.

In some embodiments, the sample task embeddings corresponding to the sample task sequence are obtained by quantizing and encoding the sample task sequence. In other words, before calculating the decoding loss value based on the first predicted task embeddings and the sample task embeddings corresponding to the sample task sequence, the method further includes the following step.

The sample task sequence is input into a second encoder of a pre-trained quantized generation model to obtain the sample task embeddings corresponding to the sample task sequence, after encoding the sample task sequence by the second encoder.

It should be noted that the quantized generation model includes the second encoder and the second decoder. The second encoder performs quantization processing on continuous task sequences to obtain discrete task embeddings, and the second decoder decodes discrete task embeddings to reconstruct task sequences. The second encoder of the quantized generation model (Vector Quantization, VQ) adopts an auto encoder structure in image generation. When training the quantized generation model, a discrete codebook is introduced in the middle of the network process with the goal of reconstructing tasks, thereby iteratively updating the model parameters of the quantized generation model to obtain the quantized generation model.

Through the solution of the embodiments of the present disclosure, the sample task sequences are input into the second encoder of the pre-trained quantized generation model, and after encoding processing by the second encoder, to obtain the sample task embeddings corresponding to the sample task sequence, thereby improving the efficiency and accuracy of obtaining the sample task embeddings corresponding to the sample task sequence.

In some embodiments, when training the task processing model, time step embeddings are further input as training supplements during each iteration, thereby improving the accuracy of the task processing model. In other words, an operation of inputting the first sample guiding embeddings and the masked task sequence into the first decoder to obtain the first predicted task embeddings includes the following steps.

A preset timestep embedding is obtained, where the timestep embedding corresponds one-to-one with each of training iterations.

The timestep embedding, the first sample guiding embeddings and the masked task sequence are input into the first decoder to obtain the first predicted task embeddings.

It should be noted that different time steps correspond to different learnable embeddings. Therefore, when training the task processing model, the timestep embedding corresponding to current iteration count can be obtained. The timestep embedding, the first sample guide embeddings and the masked task sequence are input into the first decoder to obtain an accurate first predicted task embeddings.

Illustratively, it is assumed that the current training iteration count is 2, the time step embeddings corresponding to the current training iteration count 2 is determined as X. Furthermore, the time step embeddings X, the first sample guide embeddings and the masked task sequence are input into the first decoder to obtain the first predicted task embeddings.

Through the solution of the embodiments of the present disclosure, the preset time step embeddings are obtained, where the time step embeddings corresponds one-to-one with the training iteration count; the time step embeddings, the first sample guide embeddings and masked task sequence are input into the first decoder to obtain the first predicted task embeddings. Using the time step embeddings as a supplement for training the task processing model improves the accuracy of the task processing model.

In some embodiments, the quantized generation model includes a second encoder and a second decoder, and the training method for the quantized generation model includes the following steps.

A third sample set is obtained, where the third sample set includes multiple training sample sequences.

A first training sample sequence is extracted from the third sample set, where the first training sample sequence is any training sample sequence in the third sample set.

The first training sample sequence is input into the second encoder to obtain first test embeddings.

The first test embeddings and preset prompt information is input into the second decoder to obtain a first test sequence.

A quantization loss value is calculated based on the first training sample sequence and the first test sequence.

Parameters of the second encoder and parameters of the second decoder are adjusted according to the quantization loss value, and a step of extracting the first training sample sequence from the third sample set is returned to be executed to obtain the model parameters of the trained quantized generation model in response to reaching the second preset stopping condition.

The model parameters of the trained quantized generation model are sent to the multiple terminal-side devices.

Specifically, during the training process of the quantized generation model, preset prompt information control can be introduced. That is, the preset prompt information is introduced on the side of the second decoder of the quantized generation model, enabling the second decoder to reconstruct task sequences by combining the preset prompt information with the first test embeddings obtained through compression by the second encoder. Taking an action generation task as an example, the preset prompt information is the preset trajectory information. Through the preset trajectory information, decoupled control of trajectories can be achieved. Furthermore, an action direction is randomly selected, that is different preset trajectory information is set to allow the quantized generation model to learn the relationship between actions and trajectory directions, thereby intuitively implementing simple motion control functions at the embedding level.

It should be noted that in the embodiments of the present disclosure, multiple training sample sequences in the third sample set are sample sequences corresponding to multi-modal sample information. The multi-modal sample information includes at least two types of information among sample text information, sample image information, sample trajectory information, sample voice information, sample video information, and so forth.

In practical applications, there are multiple ways to obtain the third sample set. One way is to manually input a large amount of training sample sequences to form the third sample set. Another way is to read a large amount of training sample sequences from other data acquisition devices or databases to form the third sample set. The method to obtain the third sample set is chosen specifically according to actual conditions, and the embodiments of the present disclosure do not impose any limitations on this.

In some possible implementation manners of the present disclosure, the third preset stopping condition includes a quantization loss value less than or equal to a third preset threshold. The specific value of the third preset threshold is chosen according to actual conditions, and the embodiments of the present disclosure do not impose any limitations on this. The first test embeddings and the preset prompt information are input into the second decoder to obtain the first test sequence. After obtaining the first test sequence, the quantization loss value is calculated based on the first test sequence and the first training sample sequence. The quantization loss value is then compared with the third preset threshold.

Specifically, when the quantization loss value is greater than the third preset threshold, it indicates that there is a significant difference between the first test sequence and the first training sample sequence, suggesting that the predictive capability of the quantized generation model for the first test embeddings and preset prompt information is poor. At this point, parameters of the quantized generation model can be adjusted, and the step of extracting the first training sample sequence from multiple training sample sequences can be repeated to continue training the quantized generation model until the quantization loss value is less than or equal to the third preset threshold, which indicates a smaller difference between the first test sequence and the first training sample sequence, thus meeting the third preset stopping condition and obtaining a fully trained quantized generation model.

Through the solution of the embodiments of the present disclosure, the first training sample sequence is input into the second encoder to obtain a first test embeddings; the first test embeddings and the preset prompt information are input into the second decoder to obtain the first test sequence; a quantization loss value is calculated based on the first training sample sequence and the first test sequence; the quantization loss value is compared with the third preset threshold, and the quantized generation model is continued to be trained when the quantization loss value is greater than the third preset threshold until the quantization loss value is less than or equal to the third preset threshold, so as complete the training of the quantized generation model. Through continuous adjustment of the parameters of the quantized generation model, the final obtained quantized generation model becomes more accurate.

In some possible implementation manners of the present disclosure, besides comparing the size relationship between the quantization loss value and the third preset threshold, the number of iterations can also be considered to determine whether the current quantized generation model has completed training.

Specifically, when the quantization loss value is greater than the third preset threshold, the parameters of the quantized generation model are adjusted, and the step of extracting the first training sample sequence from multiple training sample sequences is repeated to continue training the quantized generation model. Training stops, when the third preset number of iterations is reached, to obtain a fully trained quantized generation model. The specific value of the third preset number of iterations is chosen according to actual conditions, and the embodiments of the present disclosure do not impose any limitations on this.

Through the solution of the embodiments of the present disclosure, the first training sample sequence is input into the second encoder to obtain the first test embeddings; the first test embeddings and the preset prompt information are input into the second decoder to obtain the first test sequence; the quantization loss value is calculated based on the first training sample sequence and the first test sequence; the quantization loss value is compared with the third preset threshold, and the quantized generation model is continued to be trained when the quantization loss value is greater than the third preset threshold until reaching the third preset number of iterations, so as to complete the training of the quantized generation model. Through continuous adjustment of parameters of the quantized generation model, the final obtained quantized generation model becomes more accurate.

In practical applications, there are many functions for calculating the quantization loss value, such as a cross-entropy loss function, a L1 norm loss function, a maximum loss function, a mean square error loss function, a log loss function, etc. The specific choice is made according to actual conditions, and the embodiments of the present disclosure do not impose any limitations on this.

In some embodiments, in order to ensure the temporal continuity of the tasking sequence, after inputting the first test embeddings and the preset prompt information into the second decoder to obtain the first test sequence, the method further includes the following steps.

The first test sequence is randomly sliced to obtain a first test subsequence and a second test subsequence.

A continuity loss value is calculated based on the first test subsequence and the second test subsequence.

The parameters of the second encoder and the parameters of the second decoder are adjusted according to the quantization loss value, and the step of extracting the first training sample sequence from the third sample set is returned to be executed to obtain the model parameters of the trained quantized generation model in response to reaching the second preset stopping condition includes the following steps.

The parameters of the second encoder and the parameters of the second decoder are adjusted according to the quantization loss value and the continuity loss value, and the step of extracting the first training sample sequence from the third sample set is returned to be executed to obtain the model parameters of the trained quantized generation model in response to reaching the second preset stopping condition.

It should be noted that taking an action generation task as an example, during the process of action generation, since two segments of discrete action embeddings concatenated together can also generate the continuous action sequence with a smooth transition effect, to avoid temporal confusion during the action generation process and meet the requirement of temporal continuity of the action sequence. When training the quantized generation model, for a segment of continuous action sequence, it is divided at a random time point into a first test sub-sequence (seq1) and a second test sub-sequence (seq2). A loss function with action sequence temporal reconstruction consistency is introduced to calculate the continuity loss value L, as shown in the following formula (1): L = MSEloss(Decoder(Concat(Encoder(seq1), Encoder(seq2))), Decoder(Encoder(Concat (seq1, seq2))))

Through the solution of the embodiments of the present disclosure, the first test sequence is randomly divided at different times to obtain the first test sub-sequence and the second test sub-sequence; based on the first test sub-sequence and the second test sub-sequence, the continuity loss value is calculated; according to the quantization loss value and the continuity loss value, the parameters of the second encoder and the parameters of the second decoder are adjusted, and returning to execute the step of extracting the first training sample sequence from the third sample set. When reaching the second preset stopping condition, the model parameters of the trained quantized generation model are obtained, so that the generated task sequences meet the requirements of temporal continuity, thereby improving the accuracy of the task processing model.

It should be noted that the action generation method provided by the embodiments of the present disclosure can be applied to different action generation scenarios, such as action generation for virtual humans, virtual animals, and other objects in game scenes, or action generation for virtual customer service in e-commerce scenarios, etc. Specific choices are made according to actual conditions, and the embodiments of the present disclosure do not impose any limitations on this.

The following combines FIG. 5 to further explain the data processing method for the task processing model provided by the embodiments of the present disclosure, taking the data processing method for the task processing model in the field of virtual character animation generation as an example. As shown in FIG.5, FIG. 5 is a flowchart of a method for generating virtual character animation according to some embodiments of the present disclosure. The method includes the following steps.

In step 502, a virtual character animation generation request sent by a frontend is received, where the virtual character animation generation request includes animation guiding information.

In step 504, the animation guiding information and a fully-masked animation sequence are input into a virtual character animation generation model to obtain virtual character animation embeddings corresponding to the animation guiding information after processing the animation guiding information and the fully-masked animation sequence by the virtual character animation generation model.

The virtual character animation generation model is trained based on sample animation guiding information, a sample animation sequence, and sample animation embeddings, and the sample animation embeddings are obtained by quantizing and encoding the sample animation sequence.

In step 506, the virtual character animation embeddings are quantized and decoded to obtain a virtual character action sequence corresponding to the animation guiding information.

In step 508, virtual character animation is generated based on the virtual character action sequence and sending the virtual character animation to the frontend to display the virtual character animation.

Specifically, the animation guide information refers to information used for guiding the generation of virtual character animations. The animation guide information includes but is not limited to animation guide text information, animation guide image information, animation guide voice information, animation guide video information, animation guide trajectory information, with specific choices made according to actual conditions, and the embodiments of the present disclosure do not impose any limitations on this.

It should be noted that the implementation methods of step 502, step 504, and step 506 are identical to the implementation methods of step 404, step 406, and step 408 as mentioned above, thus the embodiments of the present disclosure will not repeat these descriptions.

Furthermore, after obtaining the virtual character action sequence corresponding to the animation guide information, the control of the skeletal movements of the virtual character can be achieved based on the temporal order of the virtual character action sequence, thereby generating the virtual character animation.

Through the solution of the embodiments of the present disclosure, the virtual character animation generation request sent from the front end is received. The virtual character animation generation request includes the animation guide information; the animation guide information and the full mask animation sequence are input into the virtual character animation generation model, and through processing by the virtual character animation generation model, the virtual character animation embeddings corresponding to the animation guide information are obtained, where the virtual character animation generation model is trained based on the multiple sample animation guide information, the sample animation sequence and the sample animation embeddings, and the sample animation embeddings are obtained by quantizing and encoding the sample animation sequence; quantizing and decoding are performed on the virtual character animation embeddings to obtain virtual character action sequence corresponding to the animation guide information; based on the virtual character action sequence, the virtual character animation is generated and sent to the front end, so that the front end displays the virtual character animation. Since the virtual character animation generation model is trained based on the multiple sample animation guide information, the sample animation sequence and the sample animation embeddings, where the sample animation embeddings are obtained by quantizing and encoding the sample animation sequence, efficient and accurate generation of the virtual character action sequence can be achieved through the virtual character animation generation model, and further, accurate virtual character animation can be generated based on the virtual character action sequence.

In some embodiments, before inputting the animation guiding information and the fully-masked animation sequence into the virtual character animation generation model to obtain the virtual character animation embeddings corresponding to the animation guiding information after processing the animation guiding information and the fully-masked animation sequence by the virtual character animation generation model, the method further includes the following steps.

Designated prompt information input by a user is received, where the designated prompt information includes at least one of a designated prompt text and a designated prompt audio.

A step of inputting the animation guiding information and the fully-masked animation sequence into the virtual character animation generation model to obtain the virtual character animation embeddings corresponding to the animation guiding information after processing the animation guiding information and the fully-masked animation sequence by the virtual character animation generation model includes the following steps.

The designated prompt information, the animation guiding information and the fully-masked animation sequence are input into the virtual character animation generation model to obtain the virtual character animation embeddings corresponding to the animation guiding information after processing the designated prompt information, the animation guiding information and the fully-masked animation sequence by the virtual character animation generation model.

Specifically, the designated prompt information is prompt information targeted at the animation guide information. This designated prompt information can be in text form, audio form, or a combination of text and audio forms, with specific choices made according to actual conditions, and the embodiments of the present disclosure do not impose any limitations on this.

Illustratively, it is assumed that the animation guide information is an animation guide image, the designated prompt information is a text for prompting the animation guide image, such as "A person in the animation guide image is dancing."

Through the solution of the embodiments of the present disclosure, the designated prompt information input by the user is received, where the designated prompt information includes at least one of the designated prompt text and the designated prompt audio; the designated prompt information, the animation guide information and the full mask animation sequences are input into the virtual character animation generation model, and through processing by the virtual character animation generation model, the virtual character animation embeddings corresponding to the animation guide information are obtained, thereby enhancing the accuracy of virtual character animation embeddings.

In some embodiments, an operation of after quantizing and decoding the virtual character animation embeddings to obtain the virtual character action sequence corresponding to the animation guiding information, the method further includes the following steps.

Scene information of a current scene input by a user is received.

The virtual character action sequence is adjusted based on the scene information using the virtual character animation generation model to obtain an adjusted virtual character action sequence.

Specifically, the scene information refers to an animation scene within the virtual character animation, including background information, weather information, geographic information, and so forth, with specific choices made according to actual conditions, and the embodiments of the present disclosure do not impose any limitations on this.

It should be noted that when adjusting the virtual character action sequence using the virtual character animation generation model based on the scene information, the scene information and the animation guide information are input into the encoder of the virtual character animation generation model to obtain the scene encoding embeddings and the animation guide embeddings. Further, the scene encoding embeddings, the animation guide embeddings, and the full mask animation sequence are input into the decoder of the virtual character animation generation model to obtain the adjusted virtual character action sequence. Finally, quantizing and decoding are performed on the adjusted virtual character animation embeddings to obtain the adjusted virtual character action sequence.

Through the solution of the embodiments of the present disclosure, the scene information of the current scene input by the user is received; based on the scene information, the virtual character animation generation model is adopted to adjust the virtual character action sequence to obtain the adjusted virtual character action sequence. Through adjusting the virtual character action sequence according to the scene information of the current scene, it makes the virtual character action sequence more realistic, thereby enhancing the realism of the virtual character animation.

In some embodiments, the virtual character animation embeddings are input into the second decoder of the pre-trained quantized generation model, and through decoding processing by the second decoder, the virtual character action sequence corresponding to the animation guide information is obtained. Furthermore, for generating more accurate virtual character action sequence meeting user requirements, the users can also input the target trajectory information, so as to use the target trajectory information to control the direction of action generation. In other words, an operation of quantizing and decoding the virtual character animation embeddings to obtain the virtual character action sequence corresponding to the animation guiding information includes the following steps.

Target trajectory information input by a user is received.

The virtual character animation embeddings and the target trajectory information are input into a second decoder of a quantized generation model, through decoding processing by the second decoder, to obtain the virtual character action sequence corresponding to the animation guiding information, where the quantized generation model is trained based on multiple training sample sequences.

It should be noted that the target trajectory information is represented through the relative displacement between adjacent frames. The quantized generation model learns an encoding codebook similar to a text dictionary, which can convert continuous action sequences into the discrete action embeddings. Meanwhile, under the input of different trajectory information, control over the direction of action generation is achieved through trajectory decoupling. The virtual character action sequence includes action-related parameters. Through the virtual character action sequence, driving of virtual characters can be realized. Taking a T×N action sequence as an example, T refers to the number of action frames, and N refers to the number of skeletal points for actions. For each skeletal point in each frame, 6D rotation is used for representation, meaning the action sequence is represented in dimensions of T×N×6.

Through the solution of the embodiments of the present disclosure, the target trajectory information input by the user is received; the virtual character animation embeddings and the target trajectory information are input into the second decoder of the quantized generation model, and through decoding processing by the second decoder, the virtual character action sequence corresponding to the animation guide information is obtained, where the quantized generation model is trained based on multiple training sample sequences. Since the movement trajectory of actions often correlates with the orientation of virtual objects, data augmentation is performed by simultaneously rotating the orientation and trajectory of virtual objects to ensure the model can learn related information such as orientation from trajectory information, thereby generating the virtual character action sequence meeting user requirements, and enhancing the accuracy of the virtual character animation.

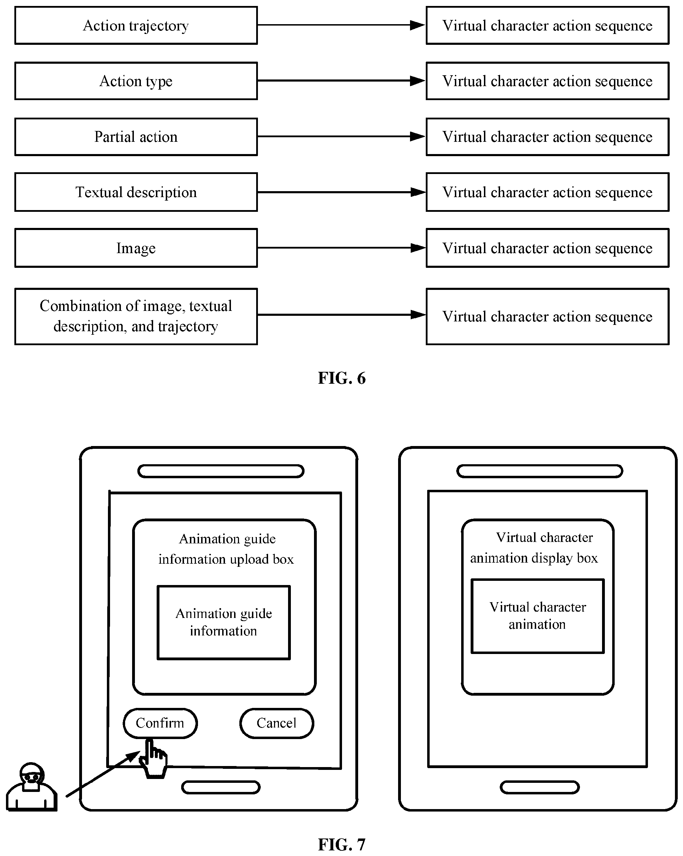

As shown in FIG. 6, FIG. 6 illustrates a schematic diagram of a processing procedure for a method for generating virtual character animation provided by some embodiments of the present disclosure. As shown in FIG. 6, a user inputs animation guide information, which includes an action trajectory (3D displacement), an action type (text), partial actions (6D representation and 3D position of keyframe actions), a textual description, images, combinations thereof, etc. The animation guide information is separately input into the virtual character animation generation model, and through processing by the virtual character animation generation model, the virtual character animation embeddings corresponding to the animation guide information are obtained. The virtual character animation generation model is trained based on the multiple sample animation guide information, the sample animation sequence, and the sample animation embeddings, and the sample animation embeddings are obtained by quantizing and encoding the sample animation sequence. Quantizing and decoding are performed on the virtual character animation embeddings to obtain the virtual character action sequence corresponding to the animation guide information.

Through the solution of the embodiments of the present disclosure, the animation guide information of different modalities is converted into a unified format, the unified input of different types of information is accommodated during the learning process, thus achieving unification of various multi-modal virtual character animation generation tasks, improving the accuracy of the virtual character action sequence.

As shown in FIG. 7, FIG. 7 illustrates a schematic diagram of an interface for generating virtual character animation provided by some embodiments of the present disclosure.

The interface for generating the virtual character animation includes an animation guide information upload box, a "Confirm" control, a "Cancel" control, and a virtual character animation display box. A user uploads the animation guide information through the animation guide information upload box displayed on the front end, and selects the "Confirm" control. The server inputs the animation guide information into the virtual character animation generation model, and through processing by the virtual character animation generation model, the virtual character action sequence corresponding to the animation guide information is obtained. Based on the virtual character action sequence, the virtual character animation is generated and sent to the front end. The virtual character animation corresponding to the animation guide information is displayed in the virtual character animation display box on the front end.

It should be noted that the methods for the user to operate controls include clicking, double-clicking, touching, mouse hovering, sliding, long pressing, voice control, shaking, or any other method, with specific choices made according to actual conditions, and the embodiments of the present disclosure do not impose any limitations on this.

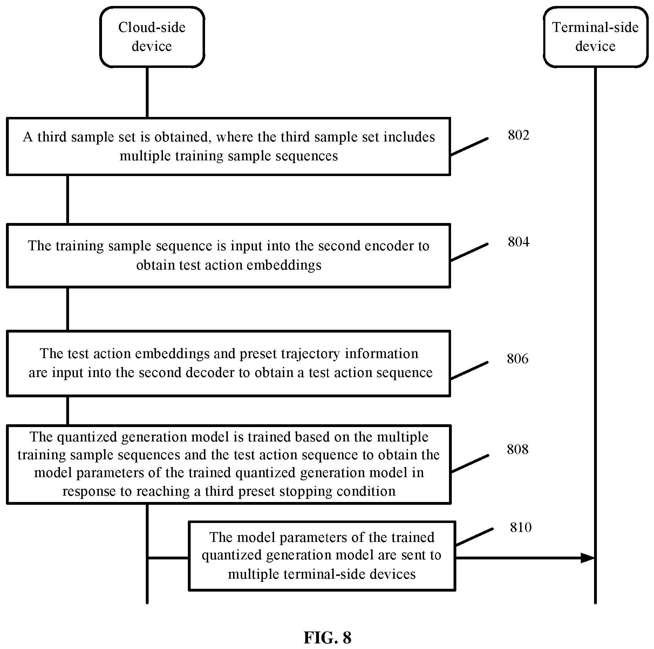

As shown in FIG. 8, FIG. 8 is a flowchart of a data processing method for a quantized generation model according to some embodiments of the present disclosure.

The quantized generation model includes a second encoder and a second decoder, and the data processing method for the quantized generation model applies to a cloud-side device, specifically including the following steps.

In step 802, a third sample set is obtained, where the third sample set includes multiple training sample sequences.

In step 804, the training sample sequence is input into the second encoder to obtain test action embeddings.

In step 806, the test action embeddings and preset trajectory information are input into the second decoder to obtain a test action sequence.

In step 808, the quantized generation model is trained based on the multiple training sample sequences and the test action sequence to obtain the model parameters of the trained quantized generation model in response to reaching a third preset stopping condition.

In step 810, the model parameters of the trained quantized generation model are sent to multiple terminal-side devices.

It should be noted that the specific implementation methods of step 802 to step 808 are identical to the implementation methods of data processing for the task processing model provided in FIG. 4 mentioned above, thus the embodiments of the present disclosure will not repeat these descriptions.

In practical applications, after the cloud-side device sends the model parameters of the quantized generation model to the terminal-side device, the terminal-side device can construct the quantized generation model based on the model parameters of the quantized generation model, thereby achieving action generation at the terminal side.

It is worth mentioning that due to the relatively small size of the quantized generation model, the data processing method for the quantized generation model can further be executed by the terminal-side device.

Through applying the solution of embodiments of the present disclosure, the cloud-side device obtains the third sample set, where the third sample set includes multiple training sample sequences; the multiple training sample sequences are input into the second encoder to obtain the test action embeddings; the test action embeddings and the preset trajectory information are input into the second decoder to obtain the test action sequence; the quantized generation model is trained based on the multiple training sample sequences and the test action sequence to obtain the model parameters of the quantized generation model in response to reaching the third preset stopping condition; and the model parameters of the quantized generation model are sent to the multiple terminal-side devices. Through performing continuous adjustment on the model parameters of the quantized generation model, the final model parameters of the quantized generation model become more accurate.

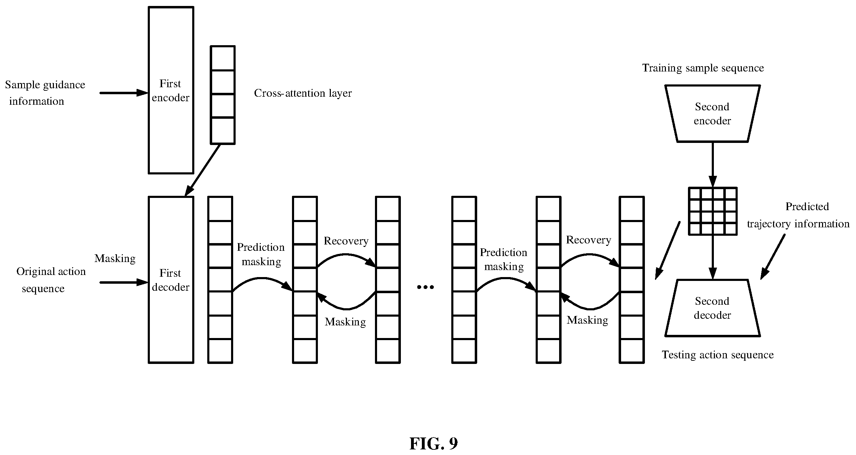

As shown in FIG. 9, FIG. 9 is a training flowchart of a task processing model and a quantized generation model according to some embodiments of the present disclosure. Taking an action generation task as an example, the task processing model is the action generation model, specifically including the following steps.

In the training of the quantized generation model, through learning a codebook, multi-modal training sample sequences are transformed into several test action embeddings, where the number of the test action embeddings is less than the product of an original frame number and a key point number. Then, each test action embedding is discretized to the nearest embedding in the codebook based on similarity. Finally, the corresponding embeddings in the codebook and the preset trajectory information are decoded to obtain the test action sequence. The entire process is optimized based on the error between the training sample sequence and the test action sequence, and the distance between the nearest embedding in the codebook and the test action embedding.

It should be noted that the second encoder of the quantized generation model is used in the training phase, and the output of the second encoder serves as the label for the output of the first decoder of the action generation model.

In the training of the action generation model, the multi-modal sample guidance information is input into the first encoder of the action generation model to obtain the sample guidance embeddings corresponding to the sample guidance information. The masking processing is perform on the original action sequence, and the sample guidance embeddings and the masked original action sequence are input into the first decoder of the action generation model to obtain the decoded action sequence. Further, the discretizing processing is performed on the decoded action sequence to obtain the predicted action embeddings. The first decoder is optimized based on the error between the predicted action embeddings and the sample action embeddings corresponding to the original action sequence to obtain the action generation model. The first encoder and the first decoder are connected through at least one cross-attention layer.

It should be noted that the training process of the action generation model includes a degradation process and a recovery process. The degradation process trains together with multi-modal sample guidance information by using a masking method. When there is missing sample guidance information of a certain modality, the corresponding position is replaced with a mask token for prediction masking. Each time, different steps are randomly selected with different mask probability distributions, and the masking processing is performed according to the corresponding mask probability to train a model to predict the original action sequence. Additionally, an extra mask head is set to re-input a prediction result of the model back into the model to predict the masked positions. During the testing phase, diverse action generation tasks are completed by adjusting different input conditions. Initially, the input is a fully masked sequence, and each prediction masks the result of the code head prediction according to the mask head structure for iteratively predicting again to set the final prediction result as the output. Specifically, the iteration process refers to initially inputting a fully masked token of the original action sequence into the first decoder to predict complete sequence embeddings of the first step. The complete sequence embeddings are input the second decoder to obtain the test action sequence. The test action sequence is input into the first decoder to predict masked positions for masking. The masked complete sequence embeddings of the first step and the second timestamp are input into the first decoder to re-predict (namely restoring) until the iteration is completed.

In practical applications, the action generation model predicts the transformation of a sequence into the embedding positions in the codebook, namely, a discretized action sequence. Specifically, during the discretization processing of the decoded action sequence, X and Y axis motion distances contained in each step of movement are directly discretized to obtain the predicted action embeddings. For instance, a range from 0 to 1 meter is divided into 200 intervals, and 0 to 0.005 meters all fall into the first predicted action embedding, while discrete predicted action embeddings correspond to the learned codebook.

Through applying the solution of embodiments of the present disclosure, the action sequences are converted into discrete action embedding sequences, thereby achieving representing various control signals as seq2seq. Through differences for replacing different action guidance information with mask tokens, the relevance between the action sequences and multi-modal signals are learned. Moreover, the action guidance information of different modalities is transformed into a unified form to ensure data volume enhancement, support scaling up models, and simultaneously avoid model overfitting through multi-tasking. Through adopting an iterative masking modeling method, multiple masking degradation and recovery processes are learned at the discrete code level for sampling by predicting mask positions through the model, so as to guarantee consistency between training and testing in generation tasks compared with adding random noise in diffusion models. Through cross-modal learning, the model demonstrates certain transferability and zero-shot learning capabilities, thereby enabling joint control of multimodal input information.

It should be noted that the sample guidance information, the sample task sequence, the training sample sequences, the preset prompt information, the animation guidance information, the fully masked animation sequence, the specified prompt information, the scene information, the target trajectory information, and other information and data related in the aforementioned method embodiments are authorized by users or fully authorized by all parties, and the collection, use, and processing of relevant data comply with laws, regulations, and standards of related countries and regions, providing corresponding operational interfaces for users to choose authorization or refusal.

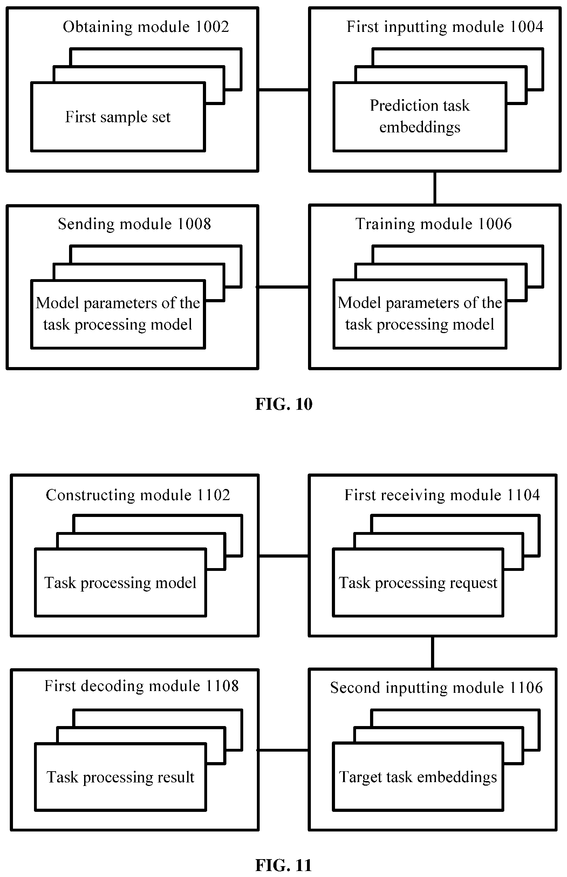

Corresponding to the data processing method embodiments of the task processing model applied to the cloud-side device, some embodiments of the present disclosure further provide a data processing apparatus for the task processing model. FIG. 10 is a structural schematic diagram of a data processing apparatus for a task processing model according to some embodiments of the present disclosure. The apparatus is applied to a cloud-side device. The cloud-side device is connected with multiple terminal-side devices. As shown in FIG. 10, the apparatus includes:
an obtaining module 1002, arranged for obtaining a first sample set, where the first sample set includes multi-modal sample guiding information;
a first inputting module 1004, arranged for inputting the sample guiding information and a sample task sequence into an initial processing model to obtain predicted task embeddings corresponding to the sample guiding information;
a training module 1006, arranged for training the initial processing model according to the predicted task embeddings and sample task embeddings corresponding to the sample task sequence to obtain model parameters of a task processing model in response to reaching a first preset stopping condition, where the sample task embeddings are obtained by quantizing and encoding the sample task sequence; and
a sending module 1008, arranged for sending the model parameters of the task processing model to the multiple terminal-side devices.

In some embodiments, the initial processing model includes a first encoder and a first decoder, and the first preset stopping condition includes a first stopping sub-condition. The first inputting module 1004 is further arranged for extracting first sample guiding information from the first sample set, where the first sample guiding information is any sample guiding information in the first sample set; inputting the first sample guiding information into the first encoder to obtain first sample guiding embeddings; masking the sample task sequence to obtain a masked task sequence; and inputting the first sample guiding embeddings and the masked task sequence into the first decoder to obtain first predicted task embeddings. The training module 1006 is further arranged for calculating a decoding loss value based on the first predicted task embeddings and the sample task embeddings corresponding to the sample task sequence; and adjusting parameters of the first decoder according to the decoding loss value, and returning to execute a step of extracting the first sample guiding information from the first sample set to obtain the first decoder in response to reaching the first stopping sub-condition.

In some embodiments, the first preset stopping condition includes a second stopping sub-condition. The first inputting module 1004 is further arranged for obtaining a second sample set, where the second sample set includes multi-modal sample guiding information carrying sample guiding embeddings; extracting second sample guiding information from the second sample set, where the second sample guiding information is any sample guiding information in the second sample set; inputting the second sample guiding information into the first encoder to obtain first predicted guiding embeddings corresponding to the second sample guiding information; calculating an encoding loss value based on the first predicted guiding embeddings and second sample guiding embeddings carried in the second sample guiding information; and adjusting parameters of the first encoder according to the encoding loss value, and returning to execute a step of extracting the second sample guiding information from the second sample set to obtain the first encoder in response to reaching the second stopping sub-condition.

In some embodiments, the first inputting module 1004 is further arranged for inputting the sample task sequence into a second encoder of a pre-trained quantized generation model to obtain the sample task embeddings corresponding to the sample task sequence, after encoding the sample task sequence by the second encoder.

In some embodiments, the first inputting module 1004 is further arranged for obtaining a preset timestep embedding, where the timestep embedding corresponds one-to-one with each of training iterations; and inputting the timestep embedding, the first sample guiding embeddings and the masked task sequence into the first decoder to obtain the first predicted task embeddings.

In some embodiments, the quantized generation model includes a second encoder and a second decoder. The apparatus further includes: a quantized generation model training model, arranged for obtaining a third sample set, where the third sample set includes multiple training sample sequences; extracting a first training sample sequence from the third sample set, where the first training sample sequence is any training sample sequence in the third sample set; inputting the first training sample sequence into the second encoder to obtain first test embeddings; inputting the first test embeddings and preset prompt information into the second decoder to obtain a first test sequence; calculating a quantization loss value based on the first training sample sequence and the first test sequence; adjusting parameters of the second encoder and parameters of the second decoder according to the quantization loss value, and returning to execute a step of extracting the first training sample sequence from the third sample set to obtain the model parameters of the trained quantized generation model in response to reaching the second preset stopping condition; and sending the model parameters of the trained quantized generation model to the multiple terminal-side devices.

In some embodiments, the quantized generation model training model is further arranged for randomly slicing the first test sequence to obtain a first test subsequence and a second test subsequence; calculating a continuity loss value based on the first test subsequence and the second test subsequence; adjusting the parameters of the second encoder and the parameters of the second decoder according to the quantization loss value and the continuity loss value, and returning to execute the step of extracting the first training sample sequence from the third sample set to obtain the model parameters of the trained quantized generation model in response to reaching the second preset stopping condition.

Through the solution provided by the embodiments of the present disclosure, the first sample set is obtained, where the first sample set includes the multi-modal sample guiding information; the sample guiding information and the sample task sequence are input into the initial processing model to obtain the predicted task embeddings corresponding to the sample guiding information; the initial processing model is trained according to the predicted task embeddings and the sample task embeddings corresponding to the sample task sequence to obtain the model parameters of the task processing model in response to reaching the first preset stopping condition, where the sample task embeddings are obtained by quantizing and encoding the sample task sequence; and the model parameters of the task processing model are sent to the multiple terminal-side devices. Since the task processing model is trained based on the multi-modal sample guiding information, unified processing of multi-modal tasks can be achieved, thereby enhancing the accuracy and universality of the task processing model.

The above describes a schematic solution of the data processing apparatus for the task processing model in some embodiments. It should be noted that the technical solution of the data processing apparatus for the task processing model and the technical solution of the data processing method for the task processing model applied to the cloud-side device belong to the same conception. Details not elaborated in the technical solution of the data processing apparatus for the task processing model can all be referred to in the description of the technical solution of the data processing method for the task processing model applied to the cloud-side device.

Corresponding to the embodiments of the data processing method for the task processing model applied to the terminal-side device, some embodiments of the present disclosure further provide the data processing apparatus for the task processing model. FIG. 11 is a structural schematic diagram of another data processing apparatus for a task processing model according to some embodiments of the present disclosure. The apparatus is applied to a terminal-side device, and the terminal-side device is connected with a cloud-side device. As shown in FIG. 11, the apparatus includes:
a constructing module 1102, arranged for receiving model parameters of a task processing model sent by the cloud-side device, and constructing a task processing model according to the model parameters;
a first receiving module 1104, arranged for receiving a task processing request input by a user, where the task processing request includes task guiding information;
a second inputting module 1106, arranged for inputting the task guiding information and a fully-masked task sequence into the task processing model to obtain target task embeddings corresponding to the task guiding information after processing the task guiding information and the fully-masked task sequence by the task processing model, where the task processing model is trained based on multi-modal sample guiding information, a sample task sequence and sample task embeddings, and the sample task embeddings are obtained by quantizing and encoding the sample task sequence; and
a first decoding module 1108, arranged for quantizing and decoding the target task embeddings to obtain a task processing result corresponding to the task guiding information.

In some embodiments, the task processing model includes a first encoder and a first decoder. The second inputting module 1106 is further arranged for inputting the task guiding information into the first encoder to obtain task guiding embeddings corresponding to the task guiding information; and inputting the task guiding embeddings and the fully-masked task sequence into the first decoder to obtain the target task embeddings corresponding to the task guiding information.

Through the solution provided by the embodiments of the present disclosure, the model parameters of the task processing model sent by the cloud-side device are received, and the task processing model is constructed according to the model parameters; the task processing request input by the user is received, where the task processing request includes the task guiding information; the task guiding information and the fully-masked task sequence are input into the task processing model to obtain the target task embeddings corresponding to the task guiding information after processing the task guiding information and the fully-masked task sequence by the task processing model, where the task processing model is trained based on the multi-modal sample guiding information, the sample task sequence and the sample task embeddings, and the sample task embeddings are obtained by quantizing and encoding the sample task sequence; and the target task embeddings are quantized and decoded to obtain the task processing result corresponding to the task guiding information. Since the task processing model is trained based on the multi-modal sample guiding information, unified processing of multi-modal tasks can be achieved, thereby enhancing the accuracy and universality of the task processing model.

The above describes a schematic solution of the data processing apparatus for the task processing model in some embodiments. It should be noted that the technical solution of the data processing apparatus for the task processing model and the technical solution of the data processing method for the task processing model applied to the terminal-side device belong to the same conception. Details not elaborated in the technical solution of the data processing apparatus for the task processing model can all be referred to in the description of the technical solution of the data processing method for the task processing model applied to the terminal-side device.

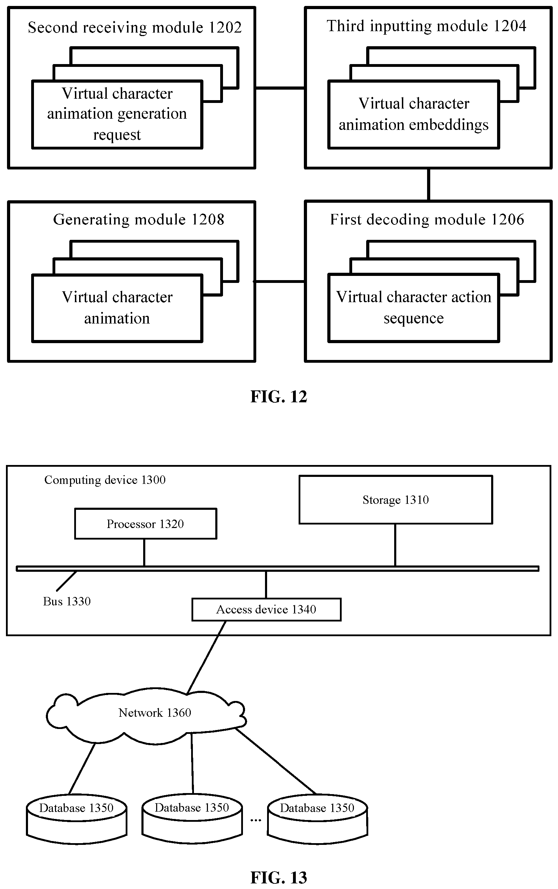

Corresponding to the embodiments of the method for generating virtual character animation, some embodiments of the present disclosure further provide an apparatus for generating virtual character animation. FIG. 12 is a structural schematic diagram of an apparatus for generating virtual character animation according to some embodiments of the present disclosure. As shown in FIG. 12, the apparatus includes:
a second receiving module 1202, arranged for receiving a virtual character animation generation request sent by a frontend, where the virtual character animation generation request includes animation guiding information;
a third inputting module 1204, arranged for inputting the animation guiding information and a fully-masked animation sequence into a virtual character animation generation model to obtain virtual character animation embeddings corresponding to the animation guiding information after processing the animation guiding information and the fully-masked animation sequence by the virtual character animation generation model, where the virtual character animation generation model is trained based on sample animation guiding information, a sample animation sequence, and sample animation embeddings, and the sample animation embeddings are obtained by quantizing and encoding the sample animation sequence;
a first decoding module 1206, arranged for quantizing and decoding the virtual character animation embeddings to obtain a virtual character action sequence corresponding to the animation guiding information; and
a generating module 1208, arranged for generating virtual character animation based on the virtual character action sequence and sending the virtual character animation to the frontend to display the virtual character animation.

In some embodiments, the apparatus further includes: a fourth inputting module, arranged for receiving designated prompt information input by a user, where the designated prompt information includes at least one of a designated prompt text and a designated prompt audio; the third inputting module 1204 is further arranged for inputting the designated prompt information, the animation guiding information and the fully-masked animation sequence into the virtual character animation generation model to obtain the virtual character animation embeddings corresponding to the animation guiding information after processing the designated prompt information, the animation guiding information and the fully-masked animation sequence by the virtual character animation generation model.

In some embodiments, the apparatus further includes: an adjustment module, arranged for receiving scene information of a current scene input by a user; and adjusting the virtual character action sequence based on the scene information using the virtual character animation generation model to obtain an adjusted virtual character action sequence.

In some embodiments, the first decoding module 1206 is further arranged for receiving target trajectory information input by a user; and inputting the virtual character animation embeddings and the target trajectory information into a second decoder of a quantized generation model, through decoding processing by the second decoder, to obtain the virtual character action sequence corresponding to the animation guiding information, where the quantized generation model is trained based on multiple training sample sequences.

Through the solution of the embodiments of the present disclosure, the virtual character animation generation request sent by the frontend is received, where the virtual character animation generation request includes the animation guiding information; the animation guiding information and the fully-masked animation sequence are input into the virtual character animation generation model to obtain the virtual character animation embeddings corresponding to the animation guiding information after processing the animation guiding information and the fully-masked animation sequence by the virtual character animation generation model, where the virtual character animation generation model is trained based on the sample animation guiding information, the sample animation sequence, and the sample animation embeddings, and the sample animation embeddings are obtained by quantizing and encoding the sample animation sequence; the virtual character animation embeddings are quantized and decoded to obtain the virtual character action sequence corresponding to the animation guiding information; and the virtual character animation is generated based on the virtual character action sequence and the virtual character animation is sent to the frontend to display the virtual character animation. Since the virtual character animation generation model is trained based on the sample animation guide information, the sample animation sequences and the sample animation embeddings, and the sample animation embeddings are obtained by quantizing and encoding the sample animation sequences, therefore, the virtual character animation generation model can efficiently and accurately generate the virtual character action sequences, and further generate the accurate virtual character animations according to the virtual character action sequences.

The above describes the schematic solution of the apparatus for generating the virtual character animation according to some embodiments of the present disclosure. It should be noted that the technical solution of the apparatus for generating the virtual character animation belongs to the same concept as the technical solution of the method for generating the virtual character animation mentioned above, and any details not fully described in the technical solution of the apparatus for generating the virtual character animation can be referred to the description of the technical solution of the method for generating the virtual character animation mentioned above.

FIG. 13 is a structural block diagram of a computing device according to some embodiments of the present disclosure. The components of the computing device 1300 include but are not limited to a memory 1310 and a processor 1320. The processor 1320 connects with the memory 1310 through a bus 1330, and a database 1350 is used for storing data.

The computing device 1300 further includes an access device 1340, where the access device 1340 enables the computing device 1300 to communicate via at least one network 1360. Examples of the at least one network include a Public Switched Telephone Network (PSTN), a Local Area Network (LAN), a Wide Area Network (WAN), a Personal Area Network (PAN), or combinations of communication networks such as the Internet. The access device 1340 includes at least one type of wired or wireless network interfaces (for example, a Network Interface Card (NIC)) of any kind, such as an IEEE802.11 Wireless Local Area Networks (WLAN) wireless interface, a Worldwide Interoperability for Microwave Access (Wi-MAX) interface, an Ethernet interface, a Universal Serial Bus (USB) interface, a cellular network interface, a Bluetooth interface, a Near Field Communication (NFC) interface, and so on.

In some embodiments of the present disclosure, components of the computing device 1300 mentioned above and other components not shown in FIG. 13 further connect with each other, for example, through a bus. It should be understood that the structural block diagram of the computing device shown in FIG. 13 is for illustration purposes and not intended to limit the scope of the present disclosure. A person having ordinary skill in the art can add or substitute other components according to requirements.

The computing device 1300 is any type of stationary or mobile computing device, including a mobile computer or a mobile computing device (such as a tablet computer, a personal digital assistant, a laptop computer, a notebook, a netbook, and the like), a mobile phone (such as a smartphone), a wearable computing device (such as a smart watch, a smart glass, and the like), or other types of mobile devices, or a stationary computing device such as a desktop computer or a personal computer (PC). The computing device 1300 is further a mobile or a stationary server.

The processor 1320 is arranged for executing computer-executable instructions to implement steps of the data processing method for the task processing model or the method for generating the virtual character animation generation.

The above describes a schematic solution of the computing device according to some embodiments of the present disclosure. It should be noted that the technical solution of the computing device belongs to the same concept as the technical solutions of the data processing method for the task processing model and the method for generating the virtual character animation mentioned above. Details not fully described in the technical solution of the computing device can refer to the description of the technical solutions of the data processing method for the task processing model or the method for generating the virtual character animation mentioned above.

Some embodiments of the present disclosure further provide a computer-readable storage medium storing computer-executable instructions. The computer-executable instructions are executed by a processor to implement steps of the data processing method for task processing model or the method for generating the virtual character animation.

The above describes a schematic solution of the computer-readable storage medium according to some embodiments of the present disclosure. It should be noted that the technical solution of the storage medium belongs to the same concept as the technical solutions of the data processing method for the task processing model and the method for generating the virtual character animation mentioned above. Details not fully described in the technical solution of the storage medium can refer to the description of the technical solutions of the data processing method for the task processing model or the method for generating the virtual character animation mentioned above.

Some embodiments of the present disclosure further provide a computer program. The computer program is executed by a computer to execute steps of the data processing method for the task processing model or the method for generating the virtual character animation.

The above describes a schematic solution of the computer program according to some embodiments of the present disclosure. It should be noted that the technical solution of the computer program belongs to the same concept as the technical solutions of the data processing method for the task processing model and the method for generating the virtual character animation mentioned above. Details not fully described in the technical solution of the computer program can refer to the description of the technical solutions of the data processing method for the task processing model or the method for generating the virtual character animation mentioned above.

The specific embodiments of the present disclosure have been described. Other embodiments fall within the scope of the appended claims. In some cases, the actions or steps recorded in the claims can be executed in an order different from that of the embodiments and still achieve desirable results. Moreover, the processes depicted in the drawings do not necessarily require the specific or sequential order shown to achieve desirable results. In certain implementations, multi-tasking and parallel processing are also possible or may be advantageous.

The computer instructions include computer program code, which can take the form of source code, object code, executable files, or some intermediate forms. The computer-readable medium includes: any entity or device capable of carrying the computer program code, recording media, USB drives, portable hard disks, magnetic disks, optical discs, computer memory, Read-Only Memory (ROM), Random Access Memory (RAM), electrical carrier signals, telecommunications signals, and software distribution media.

It should be noted that for the method embodiments mentioned above, the method embodiments have been expressed as a series of action combinations for the sake of simple description, but a person having ordinary skill in the art should understand that the embodiments of the present disclosure are not limited by the described action sequence. Since according to the embodiments of the present disclosure, some steps can be performed in other sequences or simultaneously. Furthermore, a person having ordinary skill in the art should also understand that the embodiments described in the specification are exemplary, and actions and modules involved are not necessarily essential for the embodiments of the present disclosure.

In the aforementioned embodiments, descriptions of various embodiments have focused on different aspects, and parts not detailed in some certain embodiments can be understood with reference to related descriptions in other embodiments.

The disclosed exemplary embodiments of the present disclosure are intended to assist in explaining the present disclosure. Optional embodiments do not exhaustively describe all details and do not limit the present disclosure to the specific implementation methods described. Clearly, based on the content of the embodiments of the present disclosure, numerous modifications and variations can be made. The selection and specific description of some embodiments aim to better explain principles and practical applications of the embodiments of the present disclosure so that a person having ordinary skill in the art can well understand and utilize the embodiments of the present disclosure. The embodiments of the present disclosure are limited by the claims and full scope and equivalents of the claims.

## Claims

1. A data processing method for a task processing model, applied to a cloud-side device, wherein the cloud-side device is connected with a plurality of terminal-side devices, and the method comprises:
obtaining a first sample set, wherein the first sample set comprises multi-modal sample guiding information;
inputting the sample guiding information and a sample task sequence into an initial processing model to obtain predicted task embeddings corresponding to the sample guiding information;
training the initial processing model according to the predicted task embeddings and sample task embeddings corresponding to the sample task sequence to obtain model parameters of a task processing model in response to reaching a first preset stopping condition, wherein the sample task embeddings are obtained by quantizing and encoding the sample task sequence; and
sending the model parameters of the task processing model to the plurality of terminal-side devices.

2. The method according to claim 1, wherein the initial processing model comprises a first encoder and a first decoder, and the first preset stopping condition comprises a first stopping sub-condition, inputting the sample guiding information and the sample task sequence into the initial processing model to obtain the predicted task embeddings corresponding to the sample guiding information comprises:
extracting first sample guiding information from the first sample set, wherein the first sample guiding information is any sample guiding information in the first sample set;
inputting the first sample guiding information into the first encoder to obtain first sample guiding embeddings;
masking the sample task sequence to obtain a masked task sequence; and
inputting the first sample guiding embeddings and the masked task sequence into the first decoder to obtain first predicted task embeddings; and
training the initial processing model according to the predicted task embeddings and the sample task embeddings corresponding to the sample task sequence to obtain the model parameters of the task processing model in response to reaching the first preset stopping condition comprises:
calculating a decoding loss value based on the first predicted task embeddings and the sample task embeddings corresponding to the sample task sequence; and
adjusting parameters of the first decoder according to the decoding loss value, and returning to execute a step of extracting the first sample guiding information from the first sample set to obtain the first decoder in response to reaching the first stopping sub-condition.

3. The method according to claim 2, wherein the first preset stopping condition comprises a second stopping sub-condition, and a training method for the first encoder comprises:
obtaining a second sample set, wherein the second sample set comprises multi-modal sample guiding information carrying sample guiding embeddings;
extracting second sample guiding information from the second sample set, wherein the second sample guiding information is any sample guiding information in the second sample set;
inputting the second sample guiding information into the first encoder to obtain first predicted guiding embeddings corresponding to the second sample guiding information;
calculating an encoding loss value based on the first predicted guiding embeddings and second sample guiding embeddings carried in the second sample guiding information; and
adjusting parameters of the first encoder according to the encoding loss value, and returning to execute a step of extracting the second sample guiding information from the second sample set to obtain the first encoder in response to reaching the second stopping sub-condition.

4. The method according to claim 2, before calculating the decoding loss value based on the first predicted task embeddings and the sample task embeddings corresponding to the sample task sequence, further comprising:
inputting the sample task sequence into a second encoder of a pre-trained quantized generation model to obtain the sample task embeddings corresponding to the sample task sequence, after encoding the sample task sequence by the second encoder.

5. The method according to claim 2, wherein inputting the first sample guiding embeddings and the masked task sequence into the first decoder to obtain the first predicted task embeddings comprises:
obtaining a preset timestep embedding, wherein the timestep embedding corresponds one-to-one with each of training iterations; and
inputting the timestep embedding, the first sample guiding embeddings and the masked task sequence into the first decoder to obtain the first predicted task embeddings.

6. The method according to claim 4, wherein the quantized generation model comprises a second encoder and a second decoder, and the training method for the quantized generation model comprises:
obtaining a third sample set, wherein the third sample set comprises a plurality of training sample sequences;
extracting a first training sample sequence from the third sample set, wherein the first training sample sequence is any training sample sequence in the third sample set;
inputting the first training sample sequence into the second encoder to obtain first test embeddings;
inputting the first test embeddings and preset prompt information into the second decoder to obtain a first test sequence;
calculating a quantization loss value based on the first training sample sequence and the first test sequence;
adjusting parameters of the second encoder and parameters of the second decoder according to the quantization loss value, and returning to execute a step of extracting the first training sample sequence from the third sample set to obtain the model parameters of the trained quantized generation model in response to reaching the second preset stopping condition; and
sending the model parameters of the trained quantized generation model to the plurality of terminal-side devices.

7. The method according to claim 6, after inputting the first test embeddings and the preset prompt information into the second decoder to obtain the first test sequence, further comprising:
randomly slicing the first test sequence to obtain a first test subsequence and a second test subsequence;
calculating a continuity loss value based on the first test subsequence and the second test subsequence;
adjusting the parameters of the second encoder and the parameters of the second decoder according to the quantization loss value, and returning to execute the step of extracting the first training sample sequence from the third sample set to obtain the model parameters of the trained quantized generation model in response to reaching the second preset stopping condition comprises:
adjusting the parameters of the second encoder and the parameters of the second decoder according to the quantization loss value and the continuity loss value, and returning to execute the step of extracting the first training sample sequence from the third sample set to obtain the model parameters of the trained quantized generation model in response to reaching the second preset stopping condition.

8. A data processing method for a task processing model, applied to a terminal-side device, wherein the terminal-side device is connected with a cloud-side device and the method comprises:
receiving model parameters of a task processing model sent by the cloud-side device, and constructing a task processing model according to the model parameters;
receiving a task processing request input by a user, wherein the task processing request comprises task guiding information;
inputting the task guiding information and a fully-masked task sequence into the task processing model to obtain target task embeddings corresponding to the task guiding information after processing the task guiding information and the fully-masked task sequence by the task processing model, wherein the task processing model is trained based on multi-modal sample guiding information, a sample task sequence and sample task embeddings, and the sample task embeddings are obtained by quantizing and encoding the sample task sequence; and
quantizing and decoding the target task embeddings to obtain a task processing result corresponding to the task guiding information.

9. The method according to claim 8, wherein the task processing model comprises a first encoder and a first decoder, inputting the task guiding information and the fully-masked task sequence into the task processing model to obtain the target task embeddings corresponding to the task guiding information after processing the task guiding information and the fully-masked task sequence by the task processing model comprises:
inputting the task guiding information into the first encoder to obtain task guiding embeddings corresponding to the task guiding information; and
inputting the task guiding embeddings and the fully-masked task sequence into the first decoder to obtain the target task embeddings corresponding to the task guiding information.

10. A method for generating virtual character animation, comprising:
receiving a virtual character animation generation request sent by a frontend, wherein the virtual character animation generation request comprises animation guiding information;
inputting the animation guiding information and a fully-masked animation sequence into a virtual character animation generation model to obtain virtual character animation embeddings corresponding to the animation guiding information after processing the animation guiding information and the fully-masked animation sequence by the virtual character animation generation model, wherein the virtual character animation generation model is trained based on sample animation guiding information, a sample animation sequence, and sample animation embeddings, and the sample animation embeddings are obtained by quantizing and encoding the sample animation sequence;
quantizing and decoding the virtual character animation embeddings to obtain a virtual character action sequence corresponding to the animation guiding information; and
generating virtual character animation based on the virtual character action sequence and sending the virtual character animation to the frontend to display the virtual character animation.

11. The method according to claim 10, before inputting the animation guiding information and the fully-masked animation sequence into the virtual character animation generation model to obtain the virtual character animation embeddings corresponding to the animation guiding information after processing the animation guiding information and the fully-masked animation sequence by the virtual character animation generation model, further comprising:
receiving designated prompt information input by a user, wherein the designated prompt information comprises at least one of a designated prompt text and a designated prompt audio; and
a step of inputting the animation guiding information and the fully-masked animation sequence into the virtual character animation generation model to obtain the virtual character animation embeddings corresponding to the animation guiding information after processing the animation guiding information and the fully-masked animation sequence by the virtual character animation generation model comprises:
inputting the designated prompt information, the animation guiding information and the fully-masked animation sequence into the virtual character animation generation model to obtain the virtual character animation embeddings corresponding to the animation guiding information after processing the designated prompt information, the animation guiding information and the fully-masked animation sequence by the virtual character animation generation model.

12. The method according to claim 10 or 11, after quantizing and decoding the virtual character animation embeddings to obtain the virtual character action sequence corresponding to the animation guiding information, further comprising:
receiving scene information of a current scene input by a user; and
adjusting the virtual character action sequence based on the scene information using the virtual character animation generation model to obtain an adjusted virtual character action sequence.

13. The method according to claim 10, wherein quantizing and decoding the virtual character animation embeddings to obtain the virtual character action sequence corresponding to the animation guiding information comprises:
receiving target trajectory information input by a user; and
inputting the virtual character animation embeddings and the target trajectory information into a second decoder of a quantized generation model, through decoding processing by the second decoder, to obtain the virtual character action sequence corresponding to the animation guiding information, wherein the quantized generation model is trained based on a plurality of training sample sequences.

14. A data processing system for a task processing model, comprising:
a terminal-side device, arranged for constructing a first sample set and sending the first sample set to a cloud-side device, wherein the first sample set comprises multi-modal sample guiding information; and
the cloud-side device, arranged for inputting the sample guiding information and a sample task sequence into an initial processing model to obtain predicted task embeddings corresponding to the sample guiding information; training the initial processing model according to the predicted task embeddings and sample task embeddings corresponding to the sample task sequence to obtain model parameters of a task processing model in response to reaching a first preset stopping condition, wherein the sample task embeddings are obtained by quantizing and encoding the sample task sequence; and sending the model parameters of the task processing model to the terminal-side device.

15. A computing device, comprising:
a memory and a processor;
wherein the memory is arranged for storing computer executable instructions, the processor is arranged for executing the computer executable instructions, and when executing the computer executable instructions, the processor implements steps as claimed in any one of claims 1 to 7 or any one of claims 8 to 9 or any one of claims 10 to 13.

16. A computer-readable storage medium, storing computer executable instructions, wherein the computer executable instructions are executed by the processor to implement steps as claimed in any one of claims 1 to 7 or any one of claims 8 to 9 or any one of claims 10 to 13.
